# FASCICULE DE BREVET EUROPEEN

(11) **EP 1 519 795 B1**
(45) Date de publication et mention de la délivrance du brevet: **05.04.2006**
(21) Numéro de dépôt: 03761617.4
(22) Date de dépôt: 12.06.2003
(51) Int. Cl.: B07C 1/04, B65H 7/12

(54) **PROCEDE DE DETECTION DE PLIS EN PRISE MULTIPLE DANS UNE INSTALLATION DE TRI POSTAL**
VERFAHREN ZUR ERFASSUNG VON EINZELNEN BRIEFUMSCHLÄGEN UND ZUSAMMENHAFTENDEN BRIEFUMSCHLÄGEN IN POSTSORTIERMASCHINEN
METHOD FOR DETECTING SINGLE POSTAL COVERS AND POSTAL COVERS STUCK TOGETHER IN A MAIL SORTING MACHINE

(30) Priorité: 26.06.2002 FR 0207951
(43) Date de publication de la demande: 06.04.2005
(73) Titulaire: Solystic, 94257 Gentilly Cedex (FR)
(72) Inventeur: FESQUET, Etienne, F-26000 Valence (FR); EL BERNOUSSI, Hicham, F-75015 Paris (FR); PRUDHOMME, Cyrille, F-94500 Champigny Sur Marne (FR)
(74) Mandataire: Prugneau, Philippe
(86) Numéro de dépôt international: PCT/FR2003/001766
(87) Numéro de publication internationale: WO 2004/002637

(56) Documents cités:
- EP-A- 0 696 484
- DE-C- 19 625 043

## Description

L'invention concerne un procédé de détection de plis simples et de plis en prise multiple dans une installation de tri postal par analyse d'images représentatives desdits plis postaux vus de face.

Le procédé est plus particulièrement destiné à une installation de tri postal dans laquelle des plis postaux sont introduits en entrée de l'installation sous forme de piles de plis et dans laquelle chaque pli est automatiquement dépilé pour être aiguillé vers une sortie de tri correspondant à l'adresse de destinataire qu'il porte. Plus particulièrement, un dépileur disposé en entrée de l'installation dispose les plis en série les uns derrière les autres sur un convoyeur. Durant cette opération de dépilage, il arrive que plusieurs plis restent accrochés les uns aux autres, ce qui forme un pli en prise multiple (ou prise multiple). En cas de non détection d'une prise multiple dans l'installation de tri, tous les plis de cette prise multiple sont aiguillés vers la sortie de tri correspondant à l'adresse portée par le pli qui cache les autres dans la prise multiple. Ceci correspond à une erreur d'aiguillage à la suite de laquelle les plis mal aiguillés doivent être retirés pour être à nouveau triés dans une opération ultérieure, ce qui retarde la remise de ces plis à leurs destinataires. Il existe différents dispositifs de séparation mécanique des prises multiples, mais ces dispositifs représentent un surcoût important, ils ont tendance à détériorer les plis, et leur fiabilité est restreinte. Ainsi, la détection des plis simples et des plis en prise multiple en vue de rejeter les plis en prise multiple en les orientant vers une sortie de tri particulière de l'installation reste une solution nécessaire.

Il existe différents procédés de détection des prises multiples comme par exemple celui qui est décrit dans la demande de brevet FR-A-2783442. Selon ce procédé, une image numérique est acquise de la tranche de chaque pli afin de détecter par analyse d'image s'il s'agit d'un pli simple ou d'un pli en prise multiple. En cas de détection d'une prise multiple, un système de gestion pilote l'installation pour rejeter le pli en l'aiguillant vers une sortie de tri particulière. L'analyse de l'image numérique de la tranche d'un pli est cependant peu fiable, ce qui conduit à de nombreux rejets à tort. Notamment, la tranche d'une enveloppe à soufflet est vue comme étant un pli en prise multiple alors qu'il s'agit d'un pli simple. DE-A-1962 5043 décrit des procédés de détection de plis en prise multiple selon lesquels la détection peut être réalisée en mesurant la longueur, l'hauteur ou l'épaisseur des plis. D'une façon générale, les procédés existants pour la détection des pli simples et des plis en prise multiple provoquent une grande quantité de rejets à tort.

Le but de l'invention est de proposer un procédé de détection permettant de détecter des prises multiples avec un faible taux de rejets à tort.

A cet effet, l'invention a pour objet un procédé de détection de plis simples et de plis en prise multiple dans une installation de tri postal par analyse d'images représentatives desdits plis postaux vus de face, caractérisé en ce qu'il consiste à appliquer à chaque image un traitement d'extraction de contour et à reconnaître les plis dont ledit contour a une hauteur sensiblement constante comme étant des plis simples. Selon ce procédé, la fiabilité de détection des plis simples est améliorée. Avantageusement, lesdites images de plis postaux vus de face sont également exploitées par un traitement de reconnaissance optique de caractères pour identifier automatiquement les adresses desdits plis postaux. La détection de plis simples et de plis en prise multiple pourra être basée sur un traitement de l'image numérique qui est acquise en entrée d'installation en vue de lire automatiquement l'adresse de destinataire. Il n'est ainsi pas nécessaire d'intégrer à l'installation de tri un dispositif d'acquisition d'image numérique dédié à la détection de prises multiples.

Dans un mode de mise en oeuvre préféré, le traitement d'extraction de contour consiste à extraire directement des données représentatives de la hauteur dudit contour en différents points. Les plis ayant un contour de hauteur non constante sont traités par un classifieur pour discriminer les plis simples des plis multiples. La quantité de données à analyser est réduite, et la sollicitation du classifieur est minimisée, ce qui contribue à améliorer les temps de traitements.

Selon un autre mode de mise en oeuvre, la mise en rejet de plis en prise multiples est désactivée lorsqu'un nombre prédéterminé de plis en prise multiple consécutifs est détecté, et elle reste désactivée jusqu'à ce qu'aucun pli en prise multiple ne soit détecté dans un autre nombre prédéterminé de plis consécutifs. Ainsi, pour traitement d'un lot de courrier défectueux dans lequel chaque pli est vu comme un pli multiple alors qu'il s'agit d'un pli simple la quantité de rejets à tort est encore réduite.

L'invention sera maintenant décrite plus en détail, et en référence aux dessins annexés qui en illustrent une forme de réalisation à titre d'exemple non limitatif.
La figure 1 est un organigramme représentatif du procédé selon l'invention ;
La figure 2 est une représentation schématique d'un pli simple vu de face;
La figure 3 est une représentation schématique d'un pli en prise multiple vu de face;
La figure 4 est une représentation schématique d'un pli simple vu de face susceptible d'être détecté comme étant un pli en prise multiple.

L'invention concerne un procédé de fonctionnement pour un détecteur de plis simples et de plis en prise multiple équipant une installation de tri postal. Le détecteur comprend une caméra d'acquisition d'image numérique de chaque pli postal vu de face reliée à une unité centrale pouvant faire partie d'un système de gestion informatisé de l'installation tri. La caméra utilisée pourra avantageusement être la caméra destinée au traitement par reconnaissance optique de caractère (OCR). Ainsi, les images exploitées pour le traitement OCR sont également exploitées pour la détection des plis simples et des plis en prise multiple, ce qui réduit significativement le coût de mise en oeuvre du procédé selon l'invention.

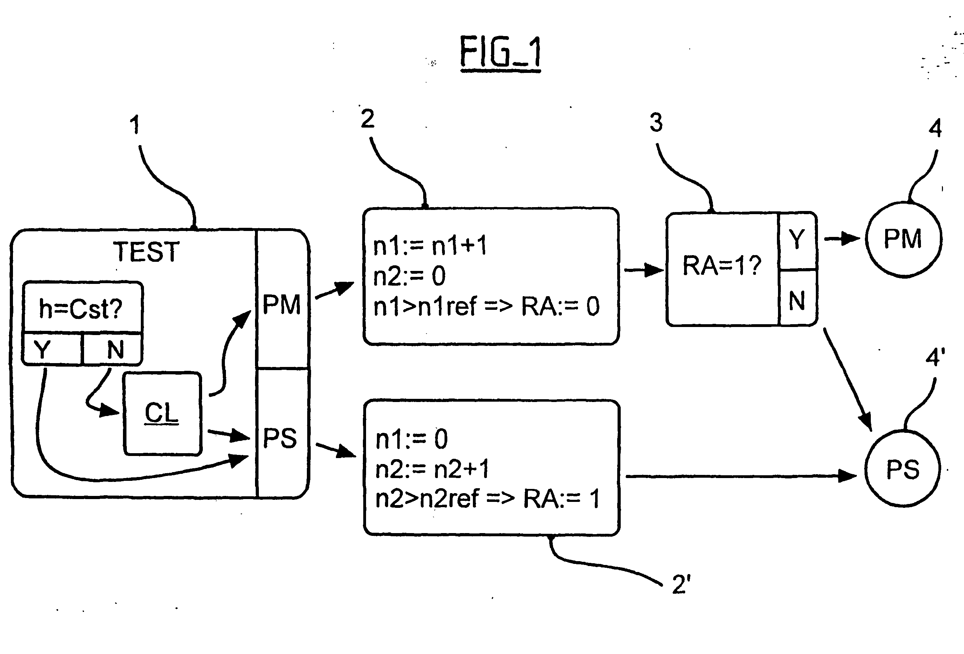

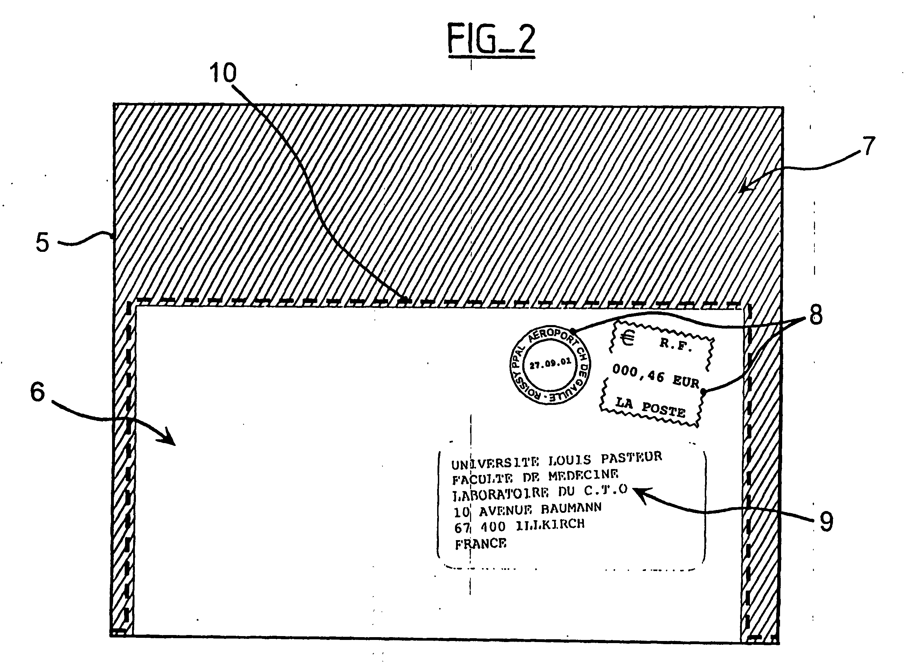

Selon l'invention, un traitement d'extraction de contour est appliqué à chaque image de pli pour distinguer les plis simples des plis en prise multiple par analyse du contour extrait de chaque image. Le traitement d'extraction pourra consister par exemple en l'application de l'opérateur de Sobel ou de Prewitt à l'image numérique. Comme représenté schématiquement dans le bloc 1 de la figure 1, l'analyse de contour pourra débuter par une évaluation de la hauteur de ce contour, ce qui est symbolisé par le sous-bloc h=Cst ?. Figure 2, une image numérique 5 d'un pli simple 6 comportant diverses inscriptions 8 et 9 définit globalement une surface claire se détachant d'un fond foncé 7 dans l'image. Le bord inférieur du pli coïncide avec le bord inférieur de l'image numérique, de sorte que le contour 10 du pli définit sensiblement un rectangle orienté parallèlement au bord inférieur de l'image numérique 5. Après application du traitement d'extraction de contour, les données représentatives de ce contour 10 sont analysées par exemple par comparaison de la hauteur de contour en différents points de manière à conclure qu'il s'agit d'un pli simple puisque cette hauteur est sensiblement constante.

D'une façon générale, des essais sur des-lots de courrier ont montré que le critère de la hauteur constante est pertinent, c'est à dire qu'il permet de détecter les plis simples avec un taux de confusion très faible. Ainsi, avec le procédé selon l'invention, un pli tel que celui de la figure 2 est rapidement identifié comme étant un pli simple. Dans le cas où la hauteur n'est pas constante, le contour du pli pourra avantageusement faire l'objet d'une analyse plus approfondie par un classifieur pour décider s'il s'agit d'un pli simple PS ou d'un pli multiple PM. Cette étape est représentée par le sous-bloc CL dans la figure 1, et les critères mis en oeuvre dans cette étape seront décrits plus bas.

Dans un mode de mise en oeuvre particulier du procédé selon l'invention, les données représentatives du contour 10 d'un pli 6 sont réduites à un signal monodimensionnel représentatif de la hauteur du contour de ce pli en différents points. Ces données pourront être par exemple formées par un vecteur contenant une pluralité de valeurs de la hauteur h(x) du bord supérieur du pli le long du bord inférieur de l'image numérique. La détection des plis ayant un contour de hauteur constante pourra par exemple consister à appliquer un filtre au contour pour en exclure les valeurs sensiblement nulles de h(x) avant de calculer le maximum M de la valeur absolue de la dérivée du contour : M = Max (|h'(x)|). Dans le cas du pli représenté figure 2, les valeurs nulles de h(x) correspondent aux zones situées à gauche du front avant et à droite du front arrière du pli, leur exclusion permet de supprimer les données correspondant au front avant et au front arrière du pli dont la dérivée h'(x) a une valeur élevée. Ainsi, les contours pour lesquels M est proche de zéro (ce qui correspond à une hauteur sensiblement constante) correspondent à des plis simples. Cette discrimination pourra avantageusement être réalisée par comparaison de la valeur M avec une valeur de référence Mref mémorisée dans le système de gestion ou dans le détecteur de manière à identifier les plis pour lesquels M < Mref à des plis simples.

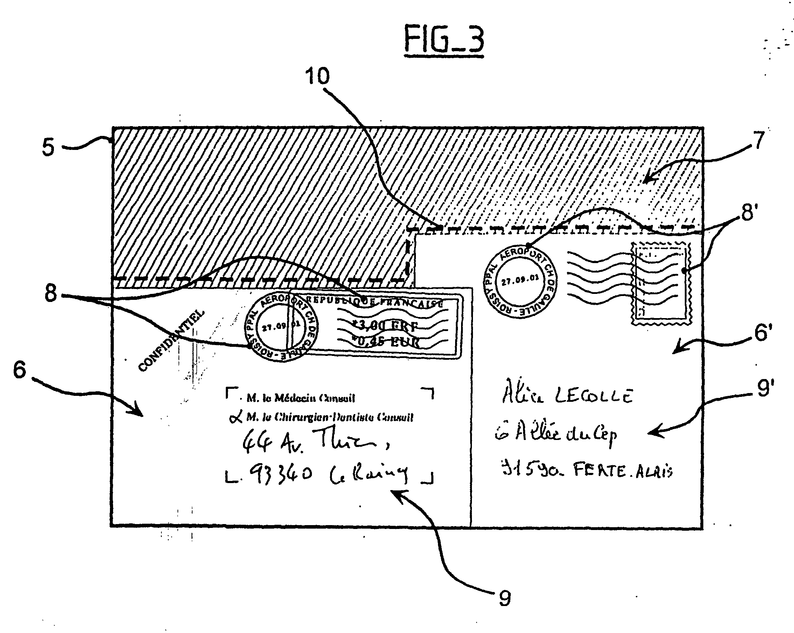

Les plis ayant une hauteur de contour non constante comme par exemple le pli représenté figure 3 pourraient être directement considérés comme étant des plis multiples mais avantageusement, ils feront l'objet d'une analyse plus approfondie de leur contour pour conclure s'il s'agit d'un pli simple ou multiple. Plus particulièrement, l'image numérique d'un pli multiple donnée figure 3 comprend un premier et un second pli 6 et 6' disposés l'un derrière l'autre. Le-contour 10 comprend ici-une-première portion horizontale correspondant au premier pli 6, suivie d'une portion verticale et d'une autre portion horizontale correspondant au second pli 6'. La portion verticale du contour correspond à une dérivée élevée qui est discriminante et conduit à la condition M > Mref de sorte que ce pli ne sera pas identifié comme un pli simple au sous-bloc h=cst ? de la figure 1 et sera orienté vers le sous-bloc CL.

Le traitement du sous-bloc CL pourra débuter par l'extraction de différentes primitives du contour pour le caractériser. Ces primitives pourront être l'écart type du contour, et la longueur L du pli. A titre d'exemple, on peut encore citer : la dérivée du second ordre qui localise les discontinuités et leurs amplitudes dans le contour ; d'autres descripteurs statistiques comme les moments normalisés ou la médiane ; ainsi que les transformées comme la transformée de Fourrier. La prise en compte de ces primitives pour décider s'ils s'agit d'un pli multiple ou simple pourra être réalisée par un classifieur équipant le détecteur ou le système de gestion de l'installation de tri postal. Ce classifieur pourra par exemple être implémenté sous forme d'un réseau de neurones, d'une logique floue, d'un système expert, d'une heuristique de traitement issue de résultats empiriques, ou d'une combinaison de ces différentes techniques.

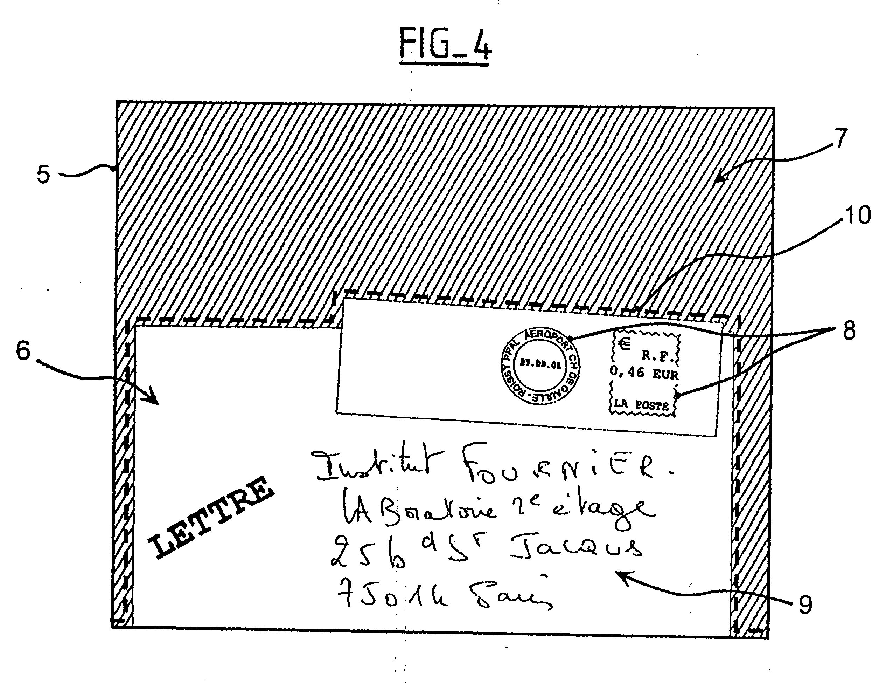

Pour réduire encore le taux de confusion dans la détection de plis en prise multiple, la mise en rejet de plis en prise multiple pourra être temporairement désactivée dans certaines situations. Selon l'invention, cette désactivation sera décidée de manière autonome par le détecteur à partir d'une comptabilisation des détections successives, de manière à détecter les lots de courrier prêtant à confusion. Figure 4, un exemplaire d'un pli d'un tel lot est une enveloppe comportant une marque d'affranchissement collée en biais. La marque d'affranchissement forme sensiblement un rectangle positionné à cheval sur le bord supérieur de l'enveloppe de sorte qu'il dépasse sensiblement de ce bord supérieur. Ce pli qui a été dépilé correctement pourrait être détecté comme étant un pli en prise multiple, puisque la hauteur de son contour n'est pas constante, alors qu'il s'agit d'un pli simple. Selon l'invention, si un trop grand nombre de plis multiples successifs est détecté la mise en rejet de ces plis est désactivée tant qu'un autre nombre de plis simples consécutifs n'est pas détecté. Cette désactivation est basée sur un décompte des résultats foumis par la détection de plis multiples, encore appelé filante. En se reportant à nouveau à la figure 1, sur détection d'un pli en prise multiple PM dans le bloc 1, un compteur n1 représentatif du nombre de plis multiples consécutifs est incrémenté en 2, ce compteur étant remis à zéro en 2' sur détection d'un pli simple PS. Si le nombre de plis multiples consécutifs n1 est supérieur à un nombre prédéterminé n1ref, la mise en rejet des plis en prise multiple est désactivée en 2 (RA :=0). Au bloc suivant 3, le pli qui a été détecté en prise multiple est rejeté en 4 si la mise en rejet des plis multiples est active (RA=1), mais si la mise en rejet a été désactivée (RA=0) ce pli est considéré comme étant un pli simple en étant orienté vers le bloc 4'. Ainsi, lors du traitement d'un lot de courrier difficile du point de vue du détecteur pour lequel tous les plis sont vus par le détecteur comme étant des plis multiples alors qu'il s'agit de plis simples, ces plis ne sont pas mis en rejet à tort. Le nombre prédéterminé n1ref pourra par exemple être situé autour de trois ou quatre.

Selon l'invention, la mise en rejet reste désactivée jusqu'à ce qu'aucun pli en prise multiple ne soit détecté dans un autre nombre prédéterminé de plis consécutifs. Plus particulièrement, sur détection d'un pli simple PS en 1, un compteur n2 représentatif des plis simples consécutifs est incrémenté en 2', ce compteur étant mis à zéro en 2 sur détection d'un pli multiple PM. Si le nombre de plis simples consécutifs n2 est supérieur à un autre nombre prédéterminé n2ref, la mise.en rejet des plis en prise multiple est réactivée en 2' (RA :=1), de telle sorte que le prochain pli multiple détecté sera rejeté. Ainsi, l'activation et la désactivation de la mise en rejet est gérée de façon autonome par le système de gestion de l'installation de tri, en fonction des résultats fournis par le détecteur 1.

Dans le cas d'un tel lot de courrier difficile du point de vue du détecteur, comprenant des plis tels que celui représenté figure 4, le décompte des plis multiples consécutifs va désactiver la mise en rejet de manière à éviter de rejeter à tort tous les plis de ce lot. Dans le cas où le lot suivant introduit dans l'installation de tri est un lot de courrier ne conduisant pas à des confusions de détection, la mise en rejet sera automatiquement réactivée sans intervention d'un opérateur.

## Revendications

1. Procédé de détection de plis simples et de plis en prise multiple dans une installation de tri postal selon lequel on reàlise une mesure de hauteur des plis (6) et on détecte une variation de la hauteur mesurée indicative de plis en prise multiple, **caractérisé en ce qu'**il comprend les étapes consistant à acquérir une image (5) de chaque pli vu de face dans un traitement de reconnaissance automatique d'adresse, à appliquer à chaque image (5) un traitement d'extraction de contour (10) et à analyser ledit contour pour réaliser ladite mesure de hauteur de pli.

2. Procédé selon la revendication 1, dans lequel on utilise un opérateur de Sobel ou de Prewitt pour réaliser l'extraction de contour dans l'image (5).

3. Procédé selon la revendication 1 ou 2, dans lequel si l'analyse de contour conduit à la détection d'une variation de hauteur du contour, on fournit des données représentatives de la hauteur dudit contour en différents points du contour à un classifieur (CL), notamment sous la forme d'un réseau de neurones, pour détecter un pli en prise multiple.

4. Procédé selon la revendication 3, dans lequel le classifieur (CL) exploite un ensemble de descripteurs statistiques ou primitives pour caractériser le contour.

5. Installation de tri postal, **caractérisée en ce qu'**elle est agencée pour mettre en oeuvre le procédé selon l'une des revendications 1 à 4 afin de mettre en rejet des plis détectés en prise multiple, ladite installation étant en outre agencée de telle manière à comptabiliser les plis simples et les plis en prise multiple pour désactiver la mise en rejet des plis en prise multiple quand un premier nombre prédéterminé (n1ref) de plis en prise multiple (6, 6') consécutifs est comptabilisé et réactiver ladite mise en rejet quand un second nombre prédéterminé (n2ref) de plis simples consécutifs est comptabilisé.

## Claims

1. A method of detecting single postal items and multiple overlapping postal items in a postal sorting installation, said method comprising providing a height measurement of the postal items (6) and detecting a variation of the measured height indicative of multiple overlapping postal items, said method being **characterized in that** it comprises the steps of acquiring an image (5) of each postal item viewed from in front into an address automatic recognition process, applying to each image (5) an outline-extraction process (10) and analyzing said outline to provide said height measurement of postal items.

2. A method according to claim 1, in which the outline-extraction process comprises applying the Sobel operator or the Prewitt operator to the image (5).

3. A method according to claim 1 or 2, in which if the outline analysis leads to the detection of a variation of height of the outline, data representing the height of said outline at various points of the outline are provided to a classifier (CL), in particular in the form of a neural network, to detect a multiple overlapping postal item.

4. A method according to claim 3, in which the classifier (CL) use a set of statistical descriptors or primitives to characterize the outline.

5. A postal sorting installation, **characterized in that** it is arranged to implement the method of any of claims 1 to 4 for rejecting postal items detected as multiple overlapping postal items, said device being further arranged so as to count the single postal items and the multiple overlapping postal items in order to deactivating the rejection of multiple overlapping postal items when a first predetermined number (n1ref) of consecutive multiple overlapping postal items (6,6') is counted and reactivating said rejection when a second predetermined number (n2ref) of consecutive single postal items is counted.

## Patentansprüche

1. Verfahren zur Erfassung von einzelnen Briefumschlägen und von zusammenhaftenden Briefumschlägen in einer Postsortiereinrichtungen, bei dem eine Messung der Höhe der Briefumschläge (6) erfolgt und eine, auf zusammenhaftende Briefumschläge hinweisenden Änderung der gemessenen Höhe erfaßt wird,
**dadurch gekennzeichnet,**
**daß** es die Schritte umfaßt:
Aufnehmen eines Bildes (5) eines jeden Briefumschlags von vorne bei einer Bearbeitung zur automatischen Adressenerkennung,
Anwenden einer Bearbeitung zur Ermittlung der Kontur (10) auf jedes Bild (5), und
Analysieren der Kontur, um die Messung der Höhe des Briefumschlages auszuführen.

2. Verfahren nach Anspruch 1, wobei man einen Sobel- oder einen Prewitt-Operator verwendet, um die Ermittlung der Kontur in dem Bild (5) auszuführen.

3. Verfahren nach Anspruch 1 oder 2, wobei, wenn die Analyse der Kontur zu der Erfassung einer Änderung der Höhe der Kontur führt, man entsprechende Daten der Höhe der Kontur an verschiedenen Punkten einem Klassifizierer (CL), insbesondere in Form eines neuronalen Netzes, zuführt, um einen zusammenhaftenden Briefumschlag zu erfassen.

4. Verfahren nach Anspruch 3, wobei der Klassifizierer (CL) eine Gesamtheit von statistischen Deskriptoren oder Primitive ausnutzt, um die Kontur zu charakterisieren.

5. Postsortiereinrichtung, **dadurch gekennzeichnet, daß** sie ausgebildet ist, um das Verfahren nach einem der Ansprüche 1 bis 4 auszuführen, um als zusammenhaftend erfaßte Briefumschläge auszusondern, wobei die Einrichtung zusätzlich derart ausgebildet ist, die einzelnen Briefumschläge und die zusammenhaftenden Briefumschläge zu registrieren, um die Aussonderung der zusammenhaftenden Briefumschläge zu deaktivieren, wenn eine erste voreingestellte Zahl (n1ref) von aufeinanderfolgenden zusammenhaftenden Briefumschlägen (6, 6') registriert wird, und um die Aussonderung zu reaktivieren, wenn eine zweite voreingestellte Zahl (n2ref) von aufeinanderfolgenden einzelnen Briefumschlägen registriert wird.
